# EUROPÄISCHE PATENTANMELDUNG

(11) **EP 2 845 924 A1**
(43) Veröffentlichungstag der Anmeldung: **11.03.2015**
(21) Anmeldenummer: 13183718.9
(22) Anmeldetag: 10.09.2013
(51) Int. Cl.: C23C 28/00, F01D 5/18, F01D 5/28, C23C 14/30, C23C 4/08, C23C 4/18, C23C 14/08

(54) **Poröses keramisches Schichtsystem**

(71) Anmelder: Siemens Aktiengesellschaft, 80333 München (DE)
(72) Erfinder: Kaiser, Axel, 41462 Neuss (DE); Limberg, Benedikt, 40239 Düsseldorf (DE); Stamm, Werner, 45481 Mühlheim an der Ruhr (DE)

(57) **Zusammenfassung**

Das vorgestellte Schichtsystem mit zwei Lagen porösen Schichten weist eine eng eingestellte und aufeinander abgestimmte Porosität auf.

## Beschreibung

Die Erfindung betrifft ein Schichtsystem mit zwei unterschiedlichen porösen keramischen Schichten.

Keramische Schutzschichten werden oft bei Bauteilen im Hochtemperatureinsatz verwendet, um das metallische Substrat vor höheren Temperaturen zu schützen.
Dabei weisen die keramischen Schichten eine gewisse Porosität auf, um zum einen die Wärmeleitfähigkeit zu verringern und um eine gewisse Duktilität einzustellen.

Es ist Aufgabe der Erfindung, die thermischen und die mechanischen Eigenschaften zu optimieren.

Die Aufgabe wird gelöst durch ein Schichtsystem gemäß Anspruch 1.

In den Unteransprüchen sind weitere vorteilhafte Maßnahmen aufgelistet, die beliebig miteinander kombiniert werden können.

Durch die keramischen und metallischen Schichten wird ein guter Oxidationsschutz und gute Wärmedämmung gewährleistet.

Es zeigen
Figur 1 ein Schichtsystem,
Figur 2 eine Gasturbine,
Figur 3 eine Turbinenschaufel,
Figur 4 eine Brennkammer,
Figur 5 eine Liste von Superlegierungen.

Die Beschreibung und Figuren stellen nur Ausführungsbeispiele der Erfindung dar.

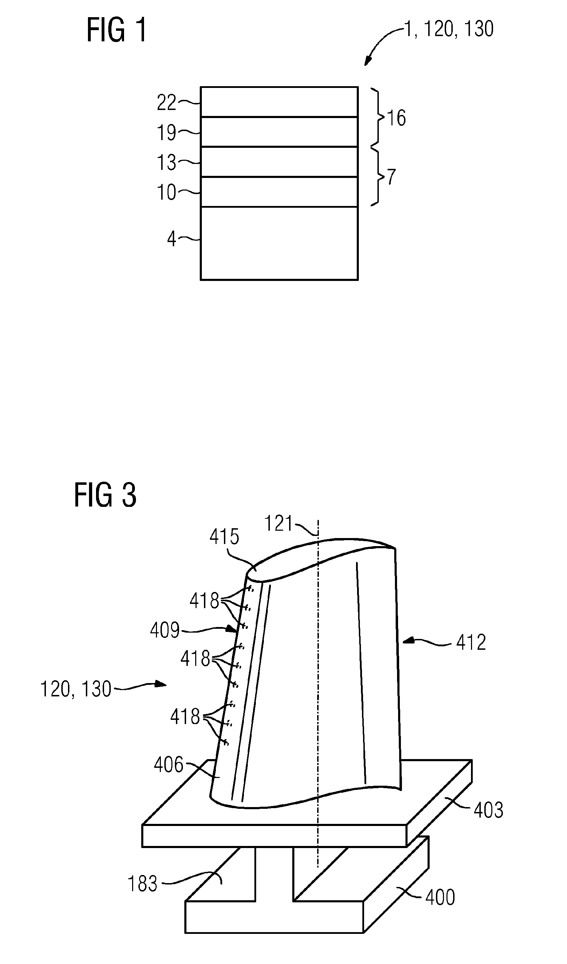

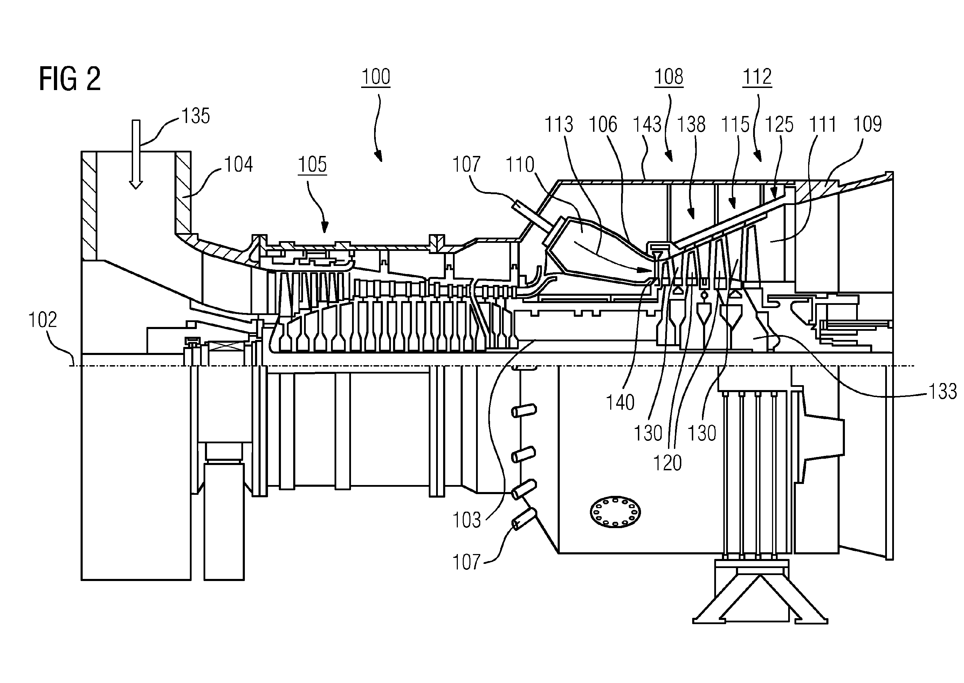

In Figur 1 ist das Schichtsystem schematisch dargestellt. Das Schichtsystem 1 ist vorzugsweise eine Turbinenschaufel 120, 130 einer Turbine, einer Dampfturbine, einer Gasturbine 100 (Fig. 2), für den stationären Betrieb oder für Flugzeuge.

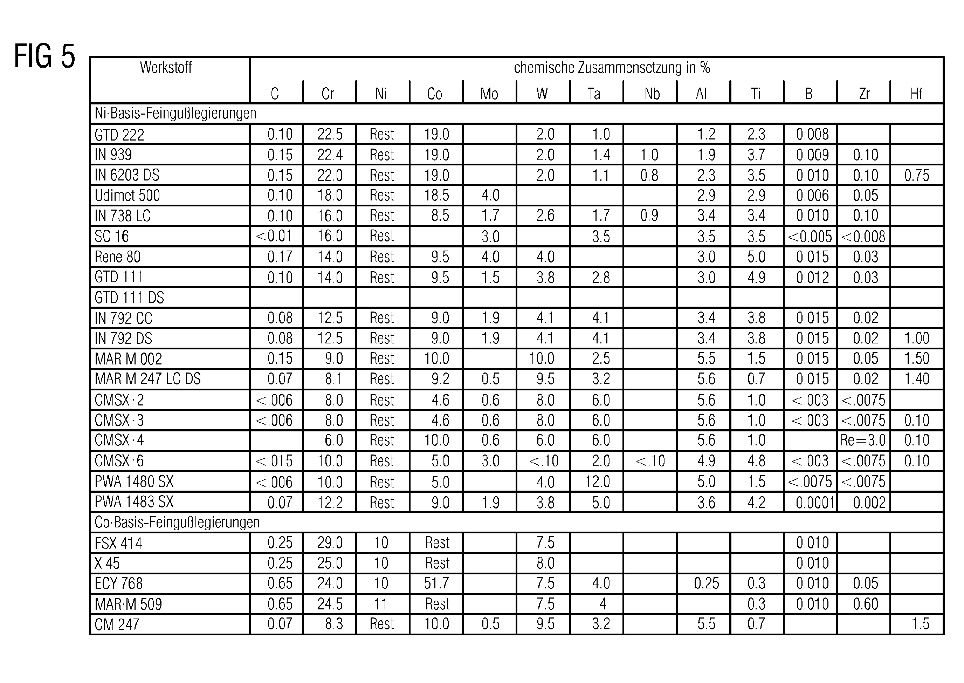

Vorzugsweise weist das Substrat 4 eine nickel- oder kobaltbasierte Superlegierung aus einer Legierung der Figur 5 auf. Vorzugsweise ist dies eine nickelbasierte Superlegierung.

Auf dem Substrat 4 ist vorzugsweise eine metallische Anbindungsschicht 7, insbesondere des Typs MCrAl oder MCrAlX vorhanden (M= Ni, Co, Fe, vorzugsweise Ni, Co).

Auf die metallische Anbindungsschicht 7 wird eine keramische Schicht 16 aufgebracht, wobei zwischen metallischen Schichten und keramischen Schichten entweder eine Oxidschicht (TGO) bewusst erzeugt bzw. aufgebracht wird oder sich während der keramischen Beschichtung oder während des Betriebs eines Schichtsystems mit der metallischen Schicht 7 bildet.

Die keramische Schicht 16 weist zumindest zwei, insbesondere nur zwei, unterschiedliche keramische Schichten 19, 22 auf.

Die untere keramische Schicht 19 weist eine geringere Porosität als die äußere keramische Schicht 22 auf.

Die Porosität der unteren keramischen Schicht 19 liegt bei 8% bis <15%, insbesondere bei 11% bis 13% (vorzugsweise vol%).

Vorzugsweise ist die Schichtdicke der inneren keramischen Schicht 19 mindestens 10%, insbesondere 20%, ganz insbesondere 50% dünner ausgebildet als die der äußeren keramischen Schicht 22.

Die untere keramische Schicht 19 hat eine Dicke von 100+25µm, während die äußere keramische Schicht 22 eine Dicke von >100µm aufweist.

Die äußere keramische Schicht 22 weist eine Porosität von >15% bis 22%, insbesondere von 16% bis 20% auf und stellt vorzugsweise die äußerste keramische Schicht 22 dar.

Das Material der unteren keramischen Schicht 19 ist teilweise, insbesondere Yttrium-stabilisiertes Zirkonoxid. Vorzugsweise wird dieses Material auch für die äußere keramische Schicht 22 verwendet, wobei aber auch ein Pyrochlormaterial verwendet werden kann, wie Gadoliniumzirkonat.

Die Porositätsauswahl der keramischen Schichten führte erstaunlicherweise zu einer längeren Lebensdauer gegenüber einer gleichdicken hochporösen Schicht.

Da diese Elemente der metallischen Schicht 7 infolge von Diffusion auch in Wechselwirkung mit dem Grundwerkstoff des Substrats 4 stehen, ist dies ebenfalls stark zu berücksichtigen.

Allgemein wird davon ausgegangen, dass wegen der relativ starken Interdiffusion von Chrom aus der Schicht in den Grundwerkstoff, der in der Regel geringere Chromgehalt als die Schicht aufweist, die Differenz zwischen den Chromgehalten in der Schicht und dem Grundwerkstoff nicht größer als ca. 5% sein sollte. Anderenfalls wird eine mehr oder minder starke Kirkendall-Porosität eintreten, die zu einem frühzeitigen Versagen des Schichtverbundes mit dem Grundwerkstoff führt. Dies haben entsprechend durchgeführte Modellrechnungen bestätigt. Experimentell wurde dieses Verhalten bestätigt, wie der Vergleich von niedrig und hoch chromhaltigen Schichten auf IN 738 LC beweist.

Andererseits ist bei der oberen Begrenzung des Chromgehaltes der Schicht zu berücksichtigen, dass bei niedrigen Chromgehalten von etwa 13 Gew.-% Chrom (Cr) in der Schicht an der Oberfläche häufig eine Spinellbildung mit "Multiple Cracking" auftritt, die ebenfalls zu einer verkürzten Lebensdauer des Schutzschichtsystems führt. Eine sehr ausgewogene Zusammensetzung der Schutzschicht führt zwar schon zu guten Ergebnissen, stellt jedoch noch nicht das Optimum dar.

Aus den oben genannten Gründen wurde eine Lösung gesucht, die alle Vorteile in sich vereinigt.

Die hier vorgeschlagene Lösung stellt eine Kombination von Schichtzusammensetzungen als Duplexschicht vor, die gegenüber bisherigen Schichtzusammensetzungen Verbesserungen im Hinblick auf die oben genannten Problematiken aufweist.

Die beschriebenen Aussagen werden in den Anlagen schematisch und als metallographische Bilder dargestellt.

Es wird eine Schutzschicht vorgeschlagen, die gegenüber den bisher verwendeten Schichten eine bessere Oxidationsbeständigkeit und gutes thermomechanisches Verhalten aufweist und aufgrund der Substitution von Rhenium deutliche Kostenvorteile besitzt. Darüber hinaus soll das Interdiffusionsverhalten gleich oder besser sein. Im Gegensatz zu üblichen Schichtzusammensetzungen weist die Oberlage der Duplexschicht Chromgehalte von > 20% Chrom, insbesondere > 22% Chrom (Cr) auf. Damit wird eine Spinellbildung und "Multiples Cracking" in der TGO vermieden. Der höhere Gehalt an Chrom (Cr) in der obersten Schichtlage hat zwei Gründe: Einerseits bleibt trotz Verdampfung von Chrom (Cr) bei der Lösungsglühbehandlung in der obersten Schichtlage genug Cr vorhanden um die Aktivität von Aluminium hoch zu halten und andererseits dient das Chrom als Keimbildner für stabiles alpha-Aluminiumoxid.

Die Unterlage (Grenzschicht zum Grundwerkstoff) der Duplexschicht weist hingegen einen deutlich geringeren Chromgehalt, vorzugsweise von ca. 11 Gew.-% - 15 Gew.-% Chrom (Cr), auf. Dies verhindert eine lebensdauermindernde Kirkendall-Porosität an der Grenzfläche zum Grundwerkstoff.

Die anderen Bestandteile der Schichten basieren auf optimierten Anteilen von Nickel (Ni), Kobalt (Co), Aluminium (Al), Seltene Erden (Y, ...) u.a., jedoch kein Rhenium (Re).

### Beispiel:

Metallische Duplex-Schutzschicht 7 weist zumindest auf:
eine untere NiCoCrAlY-Schicht 10:
NiCoCrAlY-Schutzschicht mit der Zusammensetzung (in Gew.-%) von
Ni- Gehalt: Rest
Kobalt (Co): 24% - 26%, insbesondere 25%,
Chrom (Cr): 11% -15%, insbesondere 13%,
Aluminium (Al): 10,0% - 12,0%, insbesondere 11,0%,
Yttrium (Y): 0,2% - 0,6%, insbesondere 0,3% bis 0,5%

### Mittelhoher Co- Gehalt:

Verbreiterung des Beta/Gamma-Feldes, Vermeidung spröder Phasen

### Mittlerer Cr-Gehalt:

Niedrig genug um spröde Phasen (Alpha- Chrom- oder Sigma-Phase) zu vermeiden und Kirkendall-Porosität zu vermeiden und dennoch die Schutzwirkung über lange Zeiten zu erhalten

### Mittelhoher Al-Gehalt:

Ausreichend hoch um Al zum Erhalt einer stabilen TGO nachzuliefern. Niedrig genug um gute Duktilität zu erreichen und Versprödungsneigung zu vermeiden

### Niedriger Y-Gehalt:

Ausreichend hoch um bei geringer Sauerstoffkontamination noch genügend Y-Aluminat zur Bildung von Y-haltigen "pegs" zu bilden

Niedrig genug um das Oxidschichtwachstum der Al₂0₃ Schicht negativ zu beschleunigen,
sowie eine obere NiCoCrAlY-Schicht (13):
NiCoCrAlY-Schutzschicht (13) mit der Zusammensetzung (in Gew.-%) von Ni-Gehalt: Rest
Kobalt (Co): 24% - 26%, vorzugsweise 25%,
Chrom (Cr): 23% - 25%, vorzugsweise 24%,
Aluminium (Al): 9% - 12,0%, vorzugsweise 10,5%,
Yttrium (Y): 0,2% - 0,6%, vorzugsweise 0,3% - 0,5%

### Hoher Cr-Gehalt:

Zur Vermeidung von Spinell und "Multiple Cracking" in der TGO und Verbesserung der Oxidschichtbildung aus Al₂0₃ mit geringen Oxidationsraten

### Mittelhoher Al-Gehalt:

Der Al-Gehalt ist gegenüber der Unterlage leicht abgesenkt, um eine Verschlechterung der Duktilität durch den hohen Cr-Gehalt zu minimieren.

Die NiCoCrAlY-Schichten / Legierungen können auch weitere Elemente aufweisen, andere bzw. weitere Seltenerdelemente oder Ta, Ti, Fe..., aber kein Rhenium (Re).

Für die obere NiCoCrAlY-Schicht 13 wird keine Chromierung einer Einzelschicht durchgeführt, so dass auch deshalb kein Chromgradient vorliegt, weil ein einheitliches Pulver verwendet wird, um die Schicht aufzutragen.

Thermodynamische Phasenberechnungen sowie Versuchsergebnisse der jeweiligen Einzelschicht haben gezeigt, dass gute Ergebnisse hinsichtlich Oxidation, Ausbildung der TGO und der mechanischen Eigenschaften vorliegen.

Die Gesamtschichtdicke der metallischen Schicht 7 auf der Schaufel 120, 130 sollte vorzugsweise 180µm bis 300µm betragen.

Die untere metallische Schicht 10 wird vorzugweise mit einem Feinpulver gespritzt und die obere Schicht 13 besteht aus dem hochchromhaltigen Pulver mit einer gröberen Pulverfraktion, um neben der verbesserten Oxidschichtausbildung auch die notwendige hohe Rauhigkeit von Rₐ = 9µm bis 14µm zur optimalen Haftung für eine keramische Schicht zu liefern.

Diese Vorgehensweise hat auch den Vorteil, dass kein neuer Kosten erhöhender Prozessschritt notwendig ist.

Figur 1 zeigt ein Schichtsystem aus einem Substrat 4 und der zweilagigen NiCoCrAlY-Schicht 7, die aus zwei verschiedenen Schichtzusammensetzungen 10, 13 zusammengesetzt ist.

Als Substrat 4 können nickel- oder kobaltbasierte Superlegierungen, insbesondere Legierungen gemäß Figur 3 verwendet werden.

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

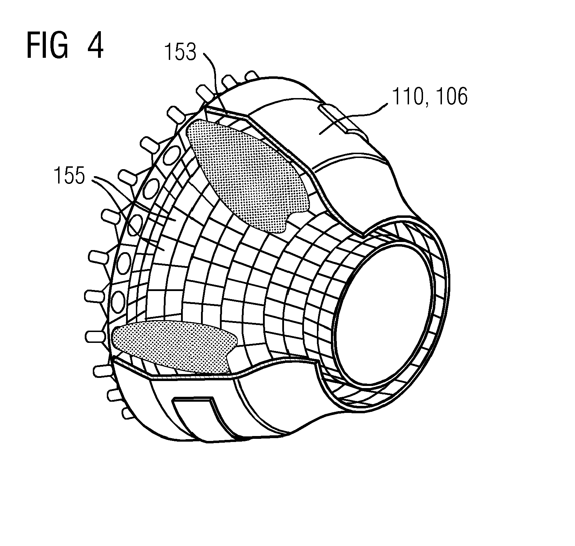

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schichtsystem
zumindest aufweisend
ein Substrat (4),
eine metallische Anbindungsschicht (7) auf dem Substrat (4),
insbesondere direkt auf dem Substrat (4),
optional eine Oxidschicht direkt auf der metallischen Anbindungsschicht (7),
eine innere keramische Schicht (19) mit einer Porosität, insbesondere in vol%,
von 8% bis < 15% auf der Anbindungsschicht (7) oder der Oxidschicht,
insbesondere von 9% bis <14.5%,
ganz insbesondere von 11% - 13%,
und einer äußeren keramischen Schicht (22),
insbesondere einer äußersten keramischen Schicht (22) mit einer Porosität von > 15% bis 22%,
insbesondere von 16% bis 20%,
ganz insbesondere 18%,
auf der inneren keramischen Schicht (10),
eine zweilagige NiCoCrAlX-Schicht als metallische Anbindungsschicht (7),
insbesondere eine nur zweilagige NiCoCrAlY-Schicht (7), mit einer unteren NiCoCrAlY-Schicht (10),
bei dem der Gehalt von Chrom (Cr) der unteren NiCoCrAlY-Schicht (10) kleiner ist,
insbesondere mindestens 3 Gew.-% kleiner ist,
ganz insbesondere mindestens 5 Gew.-% kleiner ist,
als der Gehalt von Chrom (Cr) der äußeren NiCoCrAlY-Schicht (13).

2. Schichtsystem nach Anspruch 1,
bei dem das Material der unteren keramischen Schicht (19) Zirkonoxid,
insbesondere teilstabilisiertes Zirkonoxid,
ganz insbesondere Yttrium-teilstabilisiertes Zirkonoxid aufweist,
insbesondere daraus besteht.

3. Schichtsystem nach einem oder beiden der Ansprüche 1 oder 2,
bei dem die äußere keramische Schicht (22) Zirkonoxid, insbesondere teilstabilisiertes Zirkonoxid,
ganz insbesondere Yttrium-teilstabilisiertes Zirkonoxid aufweist,
insbesondere daraus besteht.

4. Schichtsystem nach einem oder mehreren der Ansprüche 1, 2 oder 3,
bei dem das Substrat (4) eine nickel- oder kobaltbasierte Superlegierung aufweist,
insbesondere daraus besteht.

5. Schichtsystem nach einem oder mehreren der Ansprüche 1, 2, 3 oder 4,
bei dem das Material der keramischen Schichten (19, 22) verschieden ist und
insbesondere die äußere keramische Schicht (22) eine Pyrochlorstruktur aufweist,
ganz insbesondere Gadoliniumzirkonat aufweist.

6. Schichtsystem nach einem oder mehreren der Ansprüche 1, 2, 3, 4 oder 5,
bei dem die innere keramische Schicht (19) mindestens 10%, insbesondere mindestens 20%,
dünner ausgebildet ist als die äußerste keramische Schicht (22).

7. Schichtsystem nach einem oder mehreren der Ansprüche 1, 2, 3, 4, 5 oder 6,
bei dem das Schichtsystem besteht aus:
Substrat (4),
zweilagiger metallischer Anbindungsschicht (7),
optional Oxidschicht auf der metallischen Anbindungsschicht (7),
innerer keramischer Schicht (19),
äußerster keramischer Schicht (22).

8. Schichtsystem nach einem oder mehreren der Ansprüche 1 bis 7,
bei dem der der Gehalt von Kobalt (Co) der unteren NiCoCrAlY-Schicht (10) gleich oder vergleichbar ist mit dem Gehalt von Kobalt (Co) der äußeren NiCoCrAlY-Schicht (13), insbesondere bei dem der Gehalt an Kobalt (Co) gleich ist, ganz insbesondere 24 Gew.-% bis 26 Gew.-% beträgt.

9. Schichtsystem nach einem oder mehreren der Ansprüche 1, 7 oder 8,
bei dem der Unterschied im Gehalt an Chrom (Cr) in den metallischen Schichten (10, 13) 3 Gew.-% bis 13 Gew.-%, insbesondere mindestens 7 Gew.-%,
ganz insbesondere mindestens 11 Gew.-% beträgt.

10. Schichtsystem nach einem oder mehreren der Ansprüche 1, 7, 8 oder 9,
bei dem der Gehalt an Aluminium (Al) der unteren NiCoCrAlY-Schicht (10) gleich oder vergleichbar ist mit dem Gehalt von Aluminium (Al) der äußeren NiCoCrAlY-Schicht (13) insbesondere gleich ist,
ganz insbesondere 10,5 Gew.-% - 12,0 Gew.-% beträgt.

11. Schichtsystem nach einem oder mehreren der Ansprüche 1, 7, 8, 9 oder 10,
bei dem der Gehalt an Yttrium (Y) der unteren NiCoCrAlY-Schicht (10) gleich oder vergleichbar ist mit dem Gehalt von Yttrium (Y) der äußeren NiCoCrAlY-Schicht (13) gleich ist,
insbesondere 0,2 Gew.-% bis 0,6 Gew.-% beträgt.

12. Schichtsystem nach einem oder mehreren der Ansprüche 1, 7, 8, 9, 10 oder 11,
bei dem die untere NiCoCrAlY-Schicht (10) folgende Zusammensetzung aufweist (in Gew.-%):
Kobalt (Co): 24% - 26%,
insbesondere 25%,
Chrom (Cr): 11% - 15%,
insbesondere 12% - 14%,
ganz insbesondere 13%,
Aluminium (Al): 10,0% - 12,0%,
insbesondere 11,%,
Yttrium (Y): 0,2% - 0,6% ,
insbesondere 0,3% - 0,5%,
Wickel,
insbesondere daraus besteht.

13. Schichtsystem nach einem oder mehreren der Ansprüche 1, 7, 8, 9, 10, 11 oder 12,
bei dem die obere NiCoCrAlY-Schicht (13) folgende Zusammensetzung aufweist(in Gew.-%):
Kobalt (Co): 24% - 26%,
insbesondere 25%,
Chrom (Cr): 23% - 25%,
insbesondere 24%,
Aluminium (Al): 9% - 12,0%,
insbesondere 10,5%,
Yttrium (Y): 0,2% - 0,6%,
insbesondere 0,3% - 0,5%,
Nickel,
insbesondere daraus besteht.

14. Schichtsystem nach einem oder mehreren der Ansprüche 1, 7, 8, 9, 10, 11, 12 oder 13,
die keinen Gradienten in dem Gehalt an Chrom (Cr) in der Schicht (7),
insbesondere nicht in der äußeren NiCoCrAlY-Schicht (13) aufweist,
ganz insbesondere nicht chromiert ist.

15. Schichtsystem nach einem oder mehreren der Ansprüche 1 bis 14,
bei dem eine thermisch gewachsene Oxidschicht auf der äußeren NiCoCrAlY-Schicht (13) gebildet wird oder vorhanden ist.

16. Schichtsystem nach einem oder mehreren der Ansprüche 1 bis 15,
bei dem die metallische Anbindungsschicht (7) eine Gesamtdicke von 180µm bis 300µm aufweist.

17. Schichtsystem nach einem oder mehreren der vorhergehenden Ansprüche,
bei dem die verwendeten Pulver für die obere NiCoCrAlY-Schicht (13) gröber,
insbesondere 20% gröber ist als die Körnung der Pulver für die untere NiCoCrAlY-Schicht (10),
so dass die obere Schicht (13) größere Körner aufweist als die untere Schicht (10),
so dass insbesondere eine Rauhigkeit von Rₐ = 9µm bis 14pm erzielt wird.

18. Schichtsystem nach einem oder mehreren der vorhergehenden Ansprüche,
die kein Rhenium (Re) in den metallischen Schichten (7, 10, 13) aufweist.
